# EUROPÄISCHE PATENTSCHRIFT

(11) **EP 2 203 287 B1**
(45) Veröffentlichungstag und Bekanntmachung des Hinweises auf die Patenterteilung: **13.07.2016**
(21) Anmeldenummer: 08842387.6
(22) Anmeldetag: 24.10.2008
(51) Int. Cl.: B29B 7/60, B01F 15/04, B01F 7/00, B29B 7/40, B29B 7/42, E06B 3/673

(54) **Verwendung einer Vorrichtung zum Einspritzen eines Stranges aus einer pastösen Masse in den Zwischenraum zwischen zwei Glasplatten einer Isolierglasscheibe**
Use of a device for injecting a strand of a paste-like mass into the intermediate space between glass panes of an insulated glass pane
Utilisation d'un dispositif pour injecter un boudin d'une masse pâteuse dans l'espace intermédiaire entre deux plaques de verre d'un vitrage isolant

(30) Priorität: 24.10.2007 DE 102007051610
(43) Veröffentlichungstag der Anmeldung: 07.07.2010
(73) Patentinhaber: Bystronic Lenhardt GmbH, 75242 Neuhausen-Hamberg (DE)
(72) Erfinder: SCHULER, Peter, 75233 Tiefenbronn (DE)
(74) Vertreter: Twelmeier, Ulrich
(86) Internationale Anmeldenummer: PCT/EP2008/009022
(87) Internationale Veröffentlichungsnummer: WO 2009/053090

(56) Entgegenhaltungen:
- WO-A1-95/05349
- GB-A- 908 519
- US-A- 3 203 675
- US-A- 3 902 850

## Beschreibung

Die Erfindung geht von einer Verwendung einer Vorrichtung mit den im Oberbegriff des Anspruchs 1 angegebenen Merkmalen aus. Stand der Technik ist die DE 35 42 767 A1 und die DE 39 29 608 A1, welche eine Vorrichtung zum Fördern von zwei zähflüssigen Substanzen in vorgegebenem Mengenverhältnis aus zwei Vorratsbehältern zu einer Düse offenbaren, mit welcher die Randfuge einer Isolierglasscheibe versiegelt wird. Die beiden zähflüssigen Substanzen, bei denen es sich um die beiden Komponenten einer Zweikomponenten-Dicht- und Klebmasse handelt, werden durch Kolbenpumpen aus Fässern jeweils in einen Zwischenspeicher gefördert, bei welchem es sich um eine Kolben-Zylinder-Einheit handelt, aus welcher ein erster Kolben die Hauptkomponente (Binder oder Basiskomponente) der Dicht- und Klebmasse und ein zweiter Kolben die Zusatzkomponente (Härter) synchron zur Hauptkomponente presst. Hauptkomponente und Zusatzkomponente werden auf dem Förderweg zwischen der Kolben-ZylinderEinheit und der Düse durch einen statischen Mischer gefördert, in welchem sie miteinander vermischt werden.

Neigt sich der Vorrat der Hauptkomponente und der Zusatzkomponente in der Kolben-Zylinder-Einheit seinem Ende zu, muss der Versiegelungsvorgang der Isolierglasscheibe unterbrochen werden, um die Hauptkomponente und die Zusatzkomponente in die jeweilige Kolben-Zylinder-Einheit nachzufüllen. Während dieser Zeit ist eine Versiegelung von Isolierglasscheiben nicht möglich. Will man Unterbrechungen des Versiegelungsvorgangs vermeiden, muss man das Speichervolumen der Kolben-Zylinder-Einheit möglichst groß wählen. Je größer das Speichervolumen ist, desto schwieriger wird es wegen der unvermeidlichen Kompressibilität der Bestandteile der Dicht- und Klebmasse, diese so genau zu dosieren, dass weder zuviel noch zuwenig von der Masse in die Randfuge der Isolierglasscheibe gelangt. Außerdem steigen mit zunehmendem Speichervolumen das Gewicht der Kolben-Zylinder-Einheiten, der Kraftbedarf für deren Betätigen, der Druck auf das zu fördernde Material und damit auch das Gewicht für die Antriebe der Kolben der Kolben-Zylinder-Einheiten.

Um die Förderwege von den Kolben-Zylinder-Einheiten zu den Düsen kurz zu halten, ist es bekannt, die Düse und die sie speisenden Kolben-Zylinder-Einheiten auf einem gemeinsamen Träger anzuordnen. Dieser muss beweglich sein, um die Düse am Rand der Isolierglasscheiben entlang bewegen zu können. Der Aufwand für den Bewegungsantrieb steigt ebenfalls mit dem Gewicht der Kolben-Zylinder-Einheiten.

Aus der WO95/05349 A1 ist es bekannt, eine wärmehärtende Versiegelungsmasse für Isolierglasscheiben auf der Basis eines dünnflüssigen Silikons in einem statischen Mischer oder in einem dynamischen Mischer, bestehend aus einem äußeren Rohr und einem darin drehbaren inneren Rohr zu mischen und die Zusammensetzung sowie die Temperatur des Silikons so zu wählen, dass es nach dem Mischen innerhalb einiger Sekunden geliert, was aber erst in der Randfuge der Isolierglasscheibe geschehen soll, dort aber möglichst rasch.

Der vorliegenden Erfindung liegt die Aufgabe zugrunde, einen Weg aufzuzeigen, wie der Aufwand für das Versiegeln von Isolierglasscheiben verringert werden kann.

Diese Aufgabe wird gelöst durch eine Verwendung einer Vorrichtung mit den im Patentanspruch 1 angegebenen Merkmalen.

Vorteilhafte Weiterbildungen der Erfindung sind Gegenstand der Unteransprüche.

Die erfindungsgemäße Vorrichtung zum Einspritzen eines Stranges aus einer pastösen Masse in den Zwischenraum zwischen zwei Glastafeln einer Isolierglasscheibe - nachfolgend auch als Versiegelungsvorrichtung bezeichnet - hat einen Speicher für jeden der Bestandteile der pastösen Masse und eine Düse, welche mit dem Speicher durch einen Förderweg verbunden ist, in welchem ein dynamischer Mischer vorgesehen ist. Die pastöse Masse dient dazu, um den Innenraum der Isolierglasscheibe gegen das Eindringen von Wasserdampf zu versiegeln und/oder um einen dauerhaften und hinreichend festen Verbund zwischen den zwei Glastafeln herzustellen. Für einen hinreichend festen Verbund verwendet man eine abbindende Masse, welche aus wenigstens zwei Bestandteilen gebildet ist, die miteinander gemischt werden. Die durch das Mischen entstandene Masse ist zunächst pastös und bindet dann fortschreitend ab, wobei sie sich verfestigt. Abbindende Zweikomponenten-Dicht- und Klebemassen auf der Basis von Thiokol sind für das Versiegeln der Randfuge von Isolierglasscheiben besonders gebräuchlich; sie binden zu Polysulfiden ab.

In Vorrichtungen zum Versiegeln von Isolierglasscheiben, deren Glastafeln am Rand miteinander verklebt sind, wird zum Mischen der Bestandteile der pastösen Masse, welche zwischen die beiden Glastafeln gespritzt wird, seit jeher ein statischer Mischer verwendet. Davon vollzieht die vorliegende Erfindung durch die Verwendung eines dynamischen Mischers eine völlige Abkehr. Dadurch werden viele bedeutende Vorteile erzielt:
- Der Druckverlust, welchen die pastöse Masse erleidet, wenn sie durch einen dynamischen Mischer hindurchgefördert wird, ist wesentlich kleiner als der Druckverlust, den sie in einem statischen Mischer erleidet. In einer Versiegelungsvorrichtung, welche einen statischen Mischer aufweist, müssen die Bestandteile der pastösen Masse mit einem Druck, welcher bei nicht zu kleinen Abständen zwischen den Glastafeln einer Isolierglasscheibe typisch 200 bar bis 220 bar beträgt, aus den Speichern gepresst werden, aus welchen der statische Mischer gespeist wird. Von dem Druck von 200 bar bis 220 bar fällt der größte Teil auf dem Weg bis zur Düse ab; an der Düse kommt die pastöse Masse mit einem Druck an, der typisch nur noch 70 bar bis 80 bar beträgt, so dass der Druckverlust bis dahin ungefähr 2/3 des anfänglichen Druckes beträgt. Der Löwenanteil des Druckverlustes ist durch den statischen Mischer verursacht. Durch die Verwendung eines dynamischen Mischers kann mindestens ein großer Teil des sonst bei einem statischen Mischer auftretenden Druckverlustes vermieden werden.
- Infolge des stark verringerten Druckverlustes sinkt der Kraftbedarf für das Auspressen der pastösen Masse.
- Verringerter Ausgangsdruck und verringerter Kraftbedarf für das Auspressen der pastösen Masse erlauben es, leichtere Speicher und leichtere Fördereinrichtungen, z. B. hydraulische Kolbenpumpen, zu verwenden.
- Durch die Gewichtseinsparung lassen sich die Speicher, die Fördereinrichtungen und der Mischer leichter gemeinsam mit der Düse bewegen; der Antrieb für die gemeinsame Bewegung kann schwächer ausgelegt sein, was weiteres Gewicht spart.
- Das Bewegen leichterer Speicher und leichterer Fördereinrichtungen erlaubt leichtere Halterungen und Führungen für diese Dinge, was ein weiteres Mal Gewicht spart.
- Mit der Verkleinerung der zu bewegenden Masse der Versiegelungsvorrichtung sinkt deren Neigung zu unerwünschten Schwingungen und wird deren Dämpfung erleichtert.
- Geringere Drücke, geringerer Kraftbedarf und geringere Massen führen zu höherer Lebensdauer, insbesondere bei den Speichern und den hydraulischen Fördereinrichtungen sowie bei deren Dichtungen.
- Das Fassungsvermögen des dynamischen Mischers und die Verweilzeit der pastösen Masse sind, bezogen auf gleiche Mischergebnisse, im dynamischen Mischer wesentlich kleiner als im statischen Mischer. Dadurch sinkt das Volumen der pastösen Masse, welches sich zwischen den Speichern und der Düse befindet. Durch das kleinere Volumen verkleinert sich der Einfluss der Kompressibilität der pastösen Masse auf die Dosiergenauigkeit, so dass letztere sich erhöht.
- Durch die Verringerung der Durchlaufzeit der pastösen Masse durch den Mischer verringert sich das Ausmaß des Abbindens der pastösen Masse, welches auf dem Weg bis zur Düse auftritt.
- Dadurch, dass der dynamische Mischer mit einem geringeren Fassungsvermögen auskommt als ein statischer Mischer und dass die Verweildauer des Materials im dynamischen Mischer kürzer ist als im statischen Mischer, besteht keine so große Gefahr wie bei einem statischen Mischer, dass sich Material in Toträumen des Mischers festsetzt und abbindet. Zu diesem Vorteil trägt das angetriebene Mischwerkzeug bei, welches die pastöse Masse im dynamischen Mischer in Bewegung hält.
- Statische Mischer in Versiegelungsvorrichtungen für Isolierglasscheiben haben typisch eine Länge von 80 cm bis über 1 m. Ein dynamischer Mischer mit entsprechender Leistungsfähigkeit wie ein statischer Mischer ist sehr viel kürzer und kompakter als der statische Mischer. Dadurch kann die Versiegelungsvorrichtung insgesamt kompakter aufgebaut werden, wodurch ein weiteres Mal ihre Neigung zu Schwingungen sinkt.
- Eine erfindungsgemäße Versiegelungsvorrichtung mit dynamischem Mischer lässt sich preiswerter herstellen als eine herkömmliche Versiegelungsvorrichtung mit statischem Mischer.
- Versiegelungsmassen für Isolierglasscheiben sind mehr oder weniger dilatant, d. h., ihre Viskosität steigt mit zunehmendem Druck, welchem die Masse ausgesetzt ist. Da eine erfindungsgemäße Versiegelungsvorrichtung mit weniger Druck auskommt als bekannte Versiegelungseinrichtungen für Isolierglasscheiben, haben die dilatanten Versiegelungsmassen in einer erfindungsgemäßen Versiegelungsvorrichtung eine niedrigere Viskosität als in einer herkömmlichen Versiegelungsvorrichtung. Sie lassen sich mit einer erfindungsgemäßen Vorrichtung deshalb leichter verarbeiten. Das gilt bereits für das am weitesten verbreitete Thiokol. Da die Wärmedämmung einer Isolierglasscheibe umso besser wird, je größer der Abstand der Glastafeln in der Isolierglasscheibe voneinander ist, werden heute weit überwiegend Isolierglasscheiben gefertigt, bei denen der Abstand zwischen den Glastafeln 15 mm bis 25 mm beträgt. Die vorliegende Erfindung eignet sich nicht nur zur Verwendung von Thiokol als Versiegelungsmasse, sondern auch zur Verwendung von Polyurethan als Zweikomponenten-Versiegelungsmasse.

Vorzugsweise hat der dynamische Mischer ein zylindrisches oder kegelstumpfförmiges Mischrohr, in welchem als Mischwerkzeug eine antreibbare Mischerwelle angeordnet ist, welche mit von der Mischerwelle abstehenden Mischelementen versehen ist. Die Mischelemente stehen vorzugsweise radial von der Mischerwelle ab und reichen bis dicht an die innen liegende Umfangswand des Mischrohres heran, so dass der gesamte lichte Querschnitt des Mischrohres von den Mischelementen erreicht wird und sich die zu vermischenden Materialien im Mischerrohr nicht festsetzen und abbinden können. Die Mischelemente können unregelmäßig um die Mischerwelle herum angeordnet sein, sie können auch in mehreren kreisförmigen Anordnungen hintereinander auf der Mischerwelle angeordnet sein. Besonders bevorzugt ist es, wenn die Mischelemente wendelförmig um die Mischerwelle herum angeordnet sind, denn damit lässt sich am besten sicherstellen, dass alle Bereiche der innen liegenden Oberfläche des Mischrohrs von den Mischelementen überstrichen werden.

Die Mischelemente können unterschiedliche Gestalt haben: Es kann sich um Stäbe handeln, die im Querschnitt rund oder eckig ausgebildet sind. Es kann sich um Flügel oder um Bügel handeln. Vorteilhaft sind auch schaufelartig ausgebildete Mischelemente. Besonders sie können so ausgebildet sein, dass sie in Förderrichtung weisende Flächen haben, welche unter einem von 90° verschiedenen Winkel zur Längsachse der Mischerwelle angeordnet sind, so dass sie bei angetriebener Mischerwelle einen Vortrieb der pastösen Masse bewirken. Auf diese Weise kann der Druckverlust, den das Material im dynamischen Mischer erleidet, stark reduziert oder zum Verschwinden gebracht werden. Es ist sogar möglich, einen auf dem Weg vom Speicher zum dynamischen Mischer erlittenen Druckverlust wieder auszugleichen.

Besonders bevorzugt ist es, Mischelemente, die einen Vortrieb erzeugen können, mit anderen Mischelementen, die keinen Vortrieb erzeugen, aber eine größere Mischwirkung haben, zu kombinieren.

Als dynamischer Mischer kommt auch ein Mischrohr infrage, in welchem eine oder zwei Schnecken antreibbar angeordnet sind.

Bei der erfindungsgemäßen Vorrichtung sind der Strömungsquerschnitt des Mischers und seine Antriebsleistung zweckmäßigerweise für einen Durchsatz der pastösen Masse von mindestens 0,5 Liter pro Minute ausgelegt, besser für einen Durchsatz der pastösen Masse von mindestens 2 Litern pro Minute, besonders bevorzugt für einen Durchsatz von mindestens 3 Litern pro Minute. Letzteres macht die Vorrichtung besonders geeignet für das rasche Versiegeln von Isolierglasscheiben mit großem Abstand zwischen den Glasplatten.

In einer besonders vorteilhaften Weiterbildung der Erfindung sind für die Bestandteile der pastösen Masse, die in den Zwischenraum zwischen zwei Glastafeln gespritzt werden soll, jeweils zwei mit der Düse verbundene Anordnungen aus einem Speicher und aus einem in diesen eingreifenden Verdränger vorhanden und werden gegensinnig betrieben, d. h., der eine Speicher wird nachgefüllt, während aus dem anderen Speicher ein Bestandteil der Masse in den ersten Förderweg abgegeben wird, welcher zur Düse führt. Das hat weitere wesentliche Vorteile:
- Durch das gegensinnige Betreiben wird der Inhalt jenes Speichers, der gerade nachgefüllt wird, umso größer, je mehr der Inhalt im anderen Speicher abnimmt. Deshalb sind die Bestandteile der pastösen Masse ständig verfügbar, um sie in den Zwischenraum zwischen zwei Glastafeln einer Isolierglasscheibe zu spritzen.
- Die Zeit, die für das Umschalten der Speicher von Nachfüllen auf Abgeben und von Abgeben auf Nachfüllen benötigt wird, ist viel kleiner als die Zeit, die benötigt wird, um einen entleerten Speicher wieder aufzufüllen.
- Weil die Zeit, die für das Auffüllen eines Speichers benötigt wird, nicht von der Zeit verloren geht, in welcher die pastöse Masse in den Zwischenraum zwischen zwei Glastafeln einer Isolierglasscheibe gespritzt werden kann, kann das Speichervolumen der Speicher klein gehalten werden.
- Da das Speichervolumen klein gehalten werden kann, können die Speicher klein und leicht gestaltet werden, so dass der Kraftaufwand für ihre Betätigung und für ihre Handhabung entsprechend klein ist.
- Da das Speichervolumen der Speicher klein gehalten werden kann, ist der Einfluss der Kompressibilität auf die Dosiergenauigkeit der pastösen Masse und ihrer Bestandteile entsprechend gering.
- Die Erfindung ermöglicht eine kompakte Versiegelungsvorrichtung für Isolierglasscheiben, welche sich gut kontrollieren lässt.

Die Erfindung eignet sich besonders für zweikomponentige Dicht- und Klebmassen wie die in der Isolierglasfertigung bekannten Polysulfide (Thiokol), weiche aus einem Hauptbestandteil und einem Zusatzbestandteil bestehen, die auf dem Weg zur Düse miteinander im Verhältnis von ca. 9 zu 1 zu einer zweikomponentigen pastösen Masse gemischt werden, die danach alsbald fortschreitend abbindet. Die Erfindung eignet sich außerdem besonders für zweikomponentige abbindende Massen auf der Basis von Polyurethan.

Beim Versiegeln einer Isolierglasscheibe wird in die Randfuge der Isolierglasscheibe, welche durch zwei Glastafeln und die Außenseite eines die Glastafeln verbindenden Abstandhalters begrenzt ist, die abbindende Masse in der Weise gespritzt, dass sie sich als einheitlicher Strang von der einen Glastafel bis zur gegenüberliegenden Glastafel erstreckt.

Wenn die Masse, die in den Zwischenraum zwischen den Glastafeln einer Isolierglasscheibe gespritzt wird, aus zwei Bestandteilen besteht, die nach der Vermischung eine abbindende Masse bilden, dann befindet sich auf dem ersten Förderweg zwischen den beiden Speichern, aus denen die beiden Bestandteile kommen, und der Düse, aus welcher der Strang der pastösen Masse schließlich austritt, der dynamische Mischer, der die beiden Bestandteile miteinander vermischt, während sie durch ihn hindurchgefördert werden.

Die Düse kann eine oder mehr als eine Mündung haben. Das Arbeiten mit nur einer Mündung kommt infrage, wenn ein einheitlicher Strang aus der pastösen Masse gebildet werden soll. Eine Düse mit zwei Mündungen kommt dann infrage, wenn ein zweischichtiger Verbundstrang aus zwei verschiedenen pastösen Massen gebildet werden soll.

Vorzugsweise werden die paarweise gegensinnig betriebenen Anordnungen, welche aus einem Speicher und aus einem Verdränger bestehen, synchron betrieben, so dass immer dann, wenn aus einem Speicher etwas abgegeben wird, der andere Speicher im gleichen Ausmaß nachgefüllt wird. Grundsätzlich ist es aber auch möglich, von einer strengen Synchronisation abzuweichen und z. B. nicht die gesamte Zeit, in welcher aus einem Speicher eine Masse abgegeben wird, zu nutzen, um den anderen Speicher nachzufüllen; vielmehr könnte die Nachfüllzeit kürzer sein, wenn dafür der Durchsatz beim Nachfüllen entsprechend erhöht wird. Eine solche Vörgehensweise würde jedoch einen erhöhten Aufwand erfordern und ist deshalb nicht bevorzugt.

Werden mehrere pastöse Massen oder mehrere Komponenten einer pastösen Masse verarbeitet, dann soll für jede Masse bzw. für jeden Bestandteil, der separat dosiert wird, ein Paar von gegensinnig betriebenen Anordnungen vorgesehen sein, die jeweils aus einem Speicher und aus einem Verdränger bestehen. In diesem Fall wird eine jede dieser Anordnungen vorzugsweise synchron betrieben.

Zweckmäßigerweise sind die Speicher, die einander für ein paarweise gegensinniges Arbeiten zugeordnet sind, gleich groß. Beim Beginn eines Einspritzvorganges ist dann einer der Speicher mindestens halb voll, so dass für einen ununterbrochenen Einspritzvorgang grundsätzlich das halbe Volumen eines der beiden Speicher zur Verfügung steht. In vorteilhafter Weiterbildung der Erfindung wird der Einspritzvorgang, bei welchem die pastöse Masse und deren jeweilige Bestandteile abgegeben werden, jeweils aus demjenigen Speicher eines Paares von Anordnungen, die aus einem Speicher und aus einem Verdränger bestehen, abgegeben, welcher die größere Menge der Bestandteile der pastösen Masse enthält. Dann ist die Wahrscheinlichkeit, dass der anstehende Einspritzvorgang unterbrechungslos zu Ende geführt werden kann, am größten.

Bei einer rechteckigen Isolierglasscheibe ist es bekannt, den Einspritzvorgang an den Ecken der Isolierglasscheibe kurzzeitig zu unterbrechen, während die Düse um die Ecke herum bewegt wird. Diese kurzzeitige Unterbrechung kann dafür genutzt werden, die beiden Speicher eines Paares umzuschalten, so dass anschließend derjenige Speicher, welcher bis zum Erreichen einer Ecke der Isolierglasscheibe Material abgegeben hat, nachgefüllt wird, während der andere Speicher, welcher bis zum Erreichen der Ecke nachgefüllt wurde, danach Material abgibt.

Eine andere vorteilhafte Weiterbildung der Erfindung besteht darin, den Einspritzvorgang so zu steuern, dass die zwischen zwei Pausen der Bewegung der Düse jeweils benötigte Menge der pastösen Masse und ihrer Bestandteile vorab ermittelt und nach Möglichkeit aus demjenigen Speicher eines Paares von Anordnungen, welche aus einem Speicher und einem Verdränger bestehen, abgegeben wird, aus welchem dieses unterbrechungslos möglich ist. Ist das bei beiden Speichern möglich, wird derjenige Speicher für die Abgabe des Materials bevorzugt, welcher die kleinere Menge enthält. Das hat zwei Vorteile: Zum einen wird ein weitgehendes Austauschen des Materials in den Speichern begünstigt und dadurch einer Alterung des Materials in den Speichern entgegengewirkt. Zum anderen ist, wenn ein Speicher nahezu entleert wurde, der andere Speicher nahezu voll und steht für einen längeren unterbrechungsfreien Einspritzvorgang zur Verfügung, wie er für großformatige Isolierglasscheiben infrage kommt.

Die Menge der pastösen Masse, die zwischen zwei Pausen in der Bewegung der Düse benötigt wird, kann in einer zeitgemäßen, automatisch gesteuerten Fertigungslinie für das Zusammenbauen von Isolierglasscheiben leicht vorab ermittelt werden, indem die Länge, Breite und Tiefe einer Randfuge der Isolierglasscheibe vorab ermittelt werden. Das kann entweder messtechnisch geschehen oder dadurch, dass der Steuerung der Fertigungslinie die Daten der zusammenzubauenden Isolierglasscheiben vorab eingegeben werden. Diese Daten sind in der Arbeitsvorbereitung verfügbar.

Die Bestandteile der pastösen Masse, die nachgefüllt werden, stammen aus mehreren Gebinden, welche mit dem nachzufüllenden Speicher über einen zweiten Förderweg verbunden werden können, in welchem eine Pumpe angeordnet ist. Zu diesem Zweck sind die Speicher mit einer entsprechenden Anschlussmöglichkeit zum Nachfüllen versehen. Vorzugsweise geschieht das Nachfüllen über einen Zugang, der auch für das Abgeben von Material aus dem Speicher benutzt wird. Um diese Doppeltausnutzung zu verwirklichen, genügt es, den Zugang zum Speicher über ein Wegeventil vorzunehmen, welches den Zugang abwechselnd mit dem ersten Förderweg zur Düse und mit dem zweiten Förderweg verbindet, der vom Gebinde kommt. Das Wegeventil kann noch eine dritte Stellung haben, in welcher es den Zugang zum Speicher sperrt.

Für das Ausbilden der Speicher gibt es unterschiedliche Möglichkeiten. Eine Möglichkeit besteht darin, als Speicher einen Behälter zu nehmen, in welchem als Verdränger ein Balg untergebracht ist, welcher hydraulisch vergrößert und verkleinert werden kann. Vorzugsweise ist der Verdränger nicht als Balg, sondern als Kolben, insbesondere als Tauchkolben ausgebildet und taucht in einen Speicher ein, welcher vorzugsweise als Zylinder ausgebildet ist. Beim Nachfüllen des Speichers wird der Kolben durch das in den Speicher eindringende Material verdrängt. Nach dem Umschalten des dem Speicher zugeordneten Wegeventils wird der Kolben vorgeschoben und verdrängt das Material aus dem Speicher in den zur Düse führenden "ersten" Förderweg.

Das Speichervolumen ist vorzugsweise so gewählt, dass ein halbvoller Speicher ausreicht, um eine der vier Randfugen einer rechteckigen Isolierglasscheibe, welche häufig vorkommende Abmessungen hat, zu versiegeln, d. h., randnah einen oder zwei Stränge zwischen zwei Glastafeln der Isolierglasscheibe zu spritzen. Die weitaus meisten Isolierglasscheiben haben eine Kantenlänge von weniger als 1,5 m, so dass ein Speicher mit einem Volumen, welches für das Versiegeln einer 2 m bis 3 m langen Randfuge einer Isolierglasscheibe ausreicht, unter Berücksichtigung der Tatsache, dass von den beiden zusammenarbeitenden Speichern mindestens einer wenigstens halb voll ist, mindestens eine 1 m bis 1,5 m lange Randfuge versiegeln kann. Bei den meisten in der Praxis vorkommenden Isolierglasscheiben kann deshalb bei einem so gewählten Speichervolumen jede der vier Randfugen unterbrechungslos versiegelt werden. Vorzugsweise ist das Speichervolumen nicht größer als es für das Versiegeln einer 5 m bis 6 m langen Randfuge benötigt wird, was unter Berücksichtigung der Tatsache, dass einer der beiden Speicher wenigstens halb voll ist, bedeutet, dass stets genügend Material vorhanden ist, um mindestens eine Randfuge zu versiegeln, die 2,5 m bis 3 m lang ist. Wenn bei größeren Isolierglasscheiben die im Speicher vorhandene Menge nicht ausreichen sollte, um eine Randfuge unterbrechungslos zu versiegeln, ist das hinnehmbar, weil solche Isolierglasscheiben seltener vorkommen, so dass der zusätzliche Zeitaufwand für eine kurzzeitige Unterbrechung des Versiegelungsvorganges, der beim Versiegeln einer längeren Randfuge auftreten kann, in der Gesamtbilanz bei der Fertigung einer großen Anzahl von Isolierglasscheiben nicht besonders ins Gewicht fällt.

Die Erfindung ermöglicht derart kompakte Versiegelungsvorrichtungen, dass einer Düse Speicher nicht nur für die Bestandteile einer einzigen Versiegelungsmasse wie z. B. Thiokol auf einem gemeinsamen bewegten Träger zugeordnet werden können, sondern eine größere Anzahl von Speichern für die Bestandteile von unterschiedlichen Versiegelungsmassen, z. B. für Thiokol und Polyurethan oder für Thikol und Silikon oder für alle drei Versiegelungsmassen. Die Versiegelungsvorrichtung erreicht selbst in einem solchen Fall noch nicht das Gewicht einer herkömmlichen Versiegelungsvorrichtung für nur eine Versiegelungsmasse. Durch ein oder mehrere Ventile, insbesondere durch ein Wegeventil, lässt sich eine solche Versiegelungsvorrichtung bequem, zeitsparend und kostensparend von der Verarbeitung einer Versiegelungsmasse auf die Verarbeitung einer anderen Versiegelungsmasse umschalten, wenn nötig unter Wechsel auf einen anderen dynamischen Mischer und auf eine andere Düse.

Weitere Merkmale und Vorteile der Erfindung ergeben sich aus der beigefügten Beschreibung von Ausführungsbeispielen der Erfindung, welche in den beigefügten Zeichnungen dargestellt sind. In den Ausführungsbeispielen sind gleiche oder einander entsprechende Teile mit übereinstimmenden Bezugszahlen bezeichnet.
- Figur 1: zeigt eine schematische Darstellung einer Vorrichtung zum Einspritzen einer pastösen Masse in den Zwischenraum zwischen zwei Glastafeln einer Isolierglasscheibe,
- Figur 2: zeigt in einer ebenso schematischen Darstellung wie in Figur 1 ein zweites Ausführungsbeispiel einer Vorrichtung zum Einspritzen einer pastösen Masse in den Zwischenraum zwischen zwei Glastafeln einer Isolierglasscheibe, und
- Figur 3: zeigt einen Längsschnitt durch einen dynamischen Mischer.

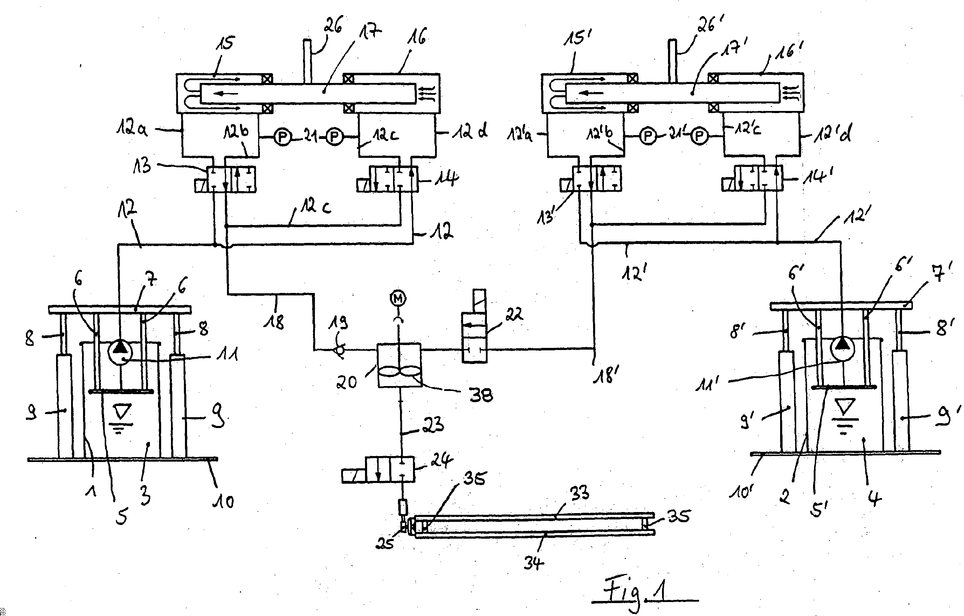

Figur 1 zeigt ein Gebinde 1 für einen ersten Bestandteil 3 einer pastösen Masse und ein Gebinde 2 für einen zweiten Bestandteil 4 der pastösen Masse. Die beiden Gebinde sind z. B. Fässer, deren Deckel abgenommen sind. Auf dem ersten Bestandteil 3 im Gebinde 1 liegt eine Folgeplatte 5. Von der Folgeplatte 5 führen zwei Stangen 6 senkrecht nach oben zu einer Traverse 7, welche nicht nur die beiden Stangen 6, sondern auch zwei Kolbenstangen 8 verbindet, welche zu zwei hydraulischen Zylindern 9 gehören, die auf einer Bodenplatte 10 verankert sind, auf welcher das Gebinde 1 steht. Durch Einziehen der Kolbenstangen 8 in die hydraulischen Zylinder 9 drückt die Traverse 7 die Folgeplatte 5 auf den im Gebinde 1 befindlichen Vorrat des Bestandteils 3 der pastösen Masse. Dadurch wird der Bestandteil 3 durch eine Öffnung in der Folgeplatte 5 in eine oberhalb der Folgeplatte 5 befindliche Pumpe 11 gedrückt, die den Bestandteil 3 in eine Leitung 12 fördert.

Die Leitung 12 verzweigt sich zu zwei Wegeventilen 13 und 14. Es handelt sich dabei um 4/2-Wegeventile. Das Wegeventil 13 ist über zwei Leitungen 12a und 12b mit zwei Zugängen mit dem Speicherraum eines ersten Zylinders 15 verbunden. Das andere Wegeventil 14 ist durch zwei Leitungen 12c und 12d mit zwei Zugängen zu einem Speicherraum eines zweiten Zylinders 16 verbunden. Das Vorsehen von zwei Zugängen zu den Zylindern 15 und 16 begünstigt einen vollständigen Materialwechsel in den Zylindern durch den Wechsel von Nachfüllen und Abgeben. Die beiden Zylinder 15 und 16 sind gleich groß und liegen in einer gemeinsamen Flucht. Ein Tauchkolben (Plunger) 17 taucht in beide Zylinder 15 und 16 zugleich ein.

Die Leitung 12a dient zum Nachfüllen des Zylinders 15 und ist in der gezeichneten Stellung des Wegeventils 13 abgesperrt. Die Leitung 12b nimmt den aus dem Zylinder 15 gepressten Bestandteil 3 auf und führt ihn in der gezeichneten Stellung des Wegeventils 13 durch dieses hindurch in eine Leitung 18, in welcher ein Rückschlagventil 19 liegt. Die Leitung 18 mündet in einen dynamischen Mischer 20, welcher als Mischelemente 38 z. B. zwei Bügel hat, die von einer Mischerwelle 37 abstehen, die von einem Motor 46 angetrieben ist.

Die Leitung 12d dient zum Nachfüllen des zweiten Zylinders 16 und ist in der gezeichneten Stellung des Wegeventils 14 mit der Leitung 12 verbunden, so dass der Zylinder 16 nachgefüllt werden kann. Die Leitung 12c ist über das zweite Wegeventil 14 mit der Leitung 18 verbunden, welche in den dynamischen Mischer 20 mündet. Die Leitung 12c ist in der gezeichneten Stellung des Wegeventils 14 unterbrochen.

Die beiden Leitungen 12b und 12c sind jeweils durch ein Überdruckventil 21 abgesichert.

In der gezeichneten Stellung der Wegeventile 13 und 14 wird der Zylinder 16 nachgefüllt, wodurch der Tauchkolben 17 vom Zylinder 16 zum Zylinder 15 geschoben wird, tiefer in den Zylinder 15 eintaucht und den darin befindlichen Bestandteil 3 in die Leitung 12b presst. Nach vorzugsweise gleichzeitigem Umschalten der Wegeventile 13 und 14 kehrt sich die Arbeitsweise um: Über die Leitung 12a wird der Zylinder 15 nachgefüllt. Der Plunger 17 wird zum gegenüberliegenden Zylinder 16 verschoben, taucht tiefer in diesen ein und verdrängt einiges vom Bestandteil 3 der pastösen Masse, in die Leitung 12d und weiter in die Leitung 18 hinein zum Mischer 20.

In einer abgewandelten Ausführungsform ist der Tauchkolben 17 mit einem gesonderten steuerbaren Antrieb versehen, z. B. mit einem Spindelantrieb, welcher an einem Arm 26 angreift, welcher am Tauchkolben 17 angebracht ist. Entsprechendes gilt für den mit einem Arm 26' versehenen Tauchkolben 17' der beiden Zylinder 15' und 16'.

Der zweite Bestandteil 4 der pastösen Masse befindet sich in dem zweiten Gebinde 2 und wird aus diesem auf gleiche Weise herausgefördert, wie der erste Bestandteil 3 aus dem ersten Gebinde 1. Die dafür benutzten Einrichtungen sind deshalb mit denselben, mit einem Strich versehenen Bezugszahlen bezeichnet.

Der zweite Bestandteil 4 wird in entsprechender Weise in zwei Zylinder 15' und 16' gefördert und gelangt von diesen in eine Leitung 18', welche wie die Leitung 18 in den Mischer 20 mündet. In der Leitung 18' liegt ein 2/2-Wegeventil 22, welches zwei Stellungen hat: In der gezeichneten Stellung unterbricht es die Leitung 18', in der anderen Stellung ist die Leitung 18' durchgängig.

Vom dynamischen Mischer 20 führt eine Leitung 23, in welcher ein 2/2-Wegeventil 24 liegt, zu einer Düse 25. Das Wegeventil 24 hat zwei Stellungen. In der gezeichneten Stellung unterbricht es die Leitung 23, in der anderen Stellung macht es die Leitung 23 durchgängig. Das Wegeventil 24 ermöglicht eine Unterbrechung der Zufuhr der pastösen Masse, welche aus den beiden Bestandteile 3 und 4 gemischt worden ist, in unmittelbarer Nachbarschaft der Düse 25. Das ist günstig für ein Verhindern des Nachlaufens der Masse, wenn der Einspritzvorgang unterbrochen wird.

Bei den Wegeventilen 13, 14, 13', 14', 22 und 24 handelt es sich um Magnetventile.

Die Zylinder 15, 16, 15' und 16' sind vorzugsweise gleich groß. Das Mengenverhältnis, in welchem sie die Bestandteile 3 und 4 zum Mischer 20 fördern, kann dadurch bestimmt werden, dass die Querschnitte der Plunger 17 und 17' unterschiedlich gewählt werden, bei einem beabsichtigten Mischungsverhältnis von neun zu eins dementsprechend mit einem Querschnittsverhältnis von neun zu eins unter der Voraussetzung, dass sich die beiden Plunger 17 und 17' gleich schnell bewegen, was durch eine mechanische Zwangssynchronisierung erreichbar ist.

Die Leitungen 12b und 18, der Mischer 20, die Leitung 23 und das Wegeventil 24 stellen einen "ersten" Förderweg bezüglich des Zylinders 15 dar. Die Leitungen 12c und 18, der Mischer 20, die Leitung 23 und das Wegeventil 24 stellen einen "erster" Förderweg bezüglich des Zylinders 16 dar. Die Leitungen 12b', 18', der Mischer 20 und die Leitung 23 Stellen einen "ersten" Förderweg bezüglich des Zylinders 15' dar. Die Leitungen 12c' und 18', der Mischer 20 und die Leitung 23 stellen einen "ersten" Förderweg bezüglich des Zylinders 16' dar. Die Leitungen 12 und 12a stellen einen "zweiten" Förderweg bezüglich des Zylinders 15 dar. Die Leitungen 12 und 12d stellen einen "zweiten" Förderweg bezüglich des Zylinders 16 dar. Die Leitungen 12' und 12'a stellen einen "zweiten" Förderweg bezüglich des Zylinders 15' dar und die Leitungen 12' und 12'd stellen einen "zweiten" Förderweg bezüglich des Zylinders 16' dar.

Die Zylinder 15, 16, 15', 16', alle-Wegeventile 13, 14, 13', 14', 22 und 24, der Mischer 20 und die Düse 25 sind bevorzugt auf einem gemeinsamen beweglichen Träger montiert und können zusammen mit der Düse 25 am Rand einer Isolierglasscheibe entlang bewegt werden.

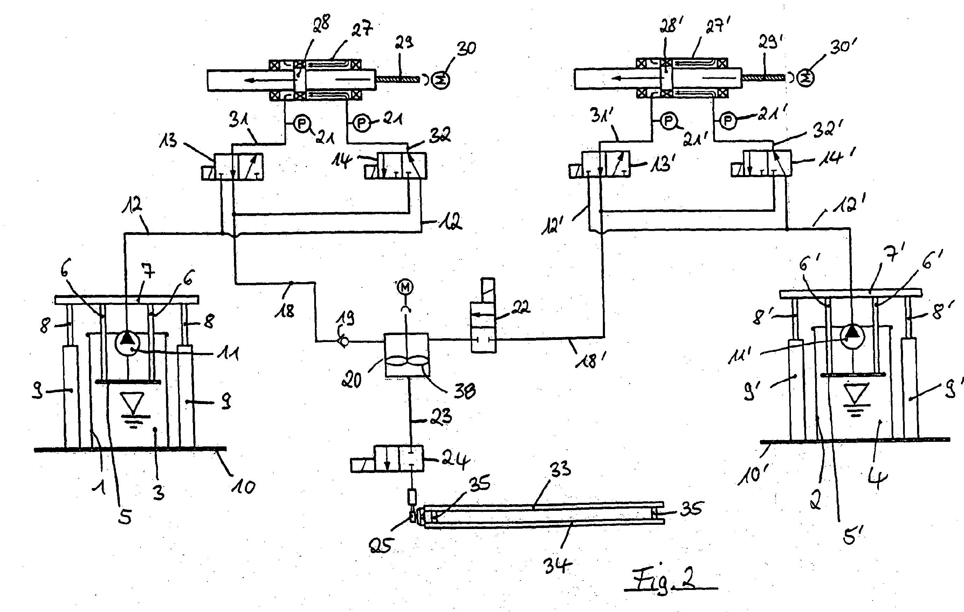

Das in Figur 2 dargestellte Ausführungsbeispiel unterscheidet sich von dem in Figur 1 dargestellten Ausführungsbeispiel darin, dass anstelle der Zylinderpaare 15 und 16 sowie 15' und 16' jeweils nur ein Zylinder 27, 27' mit einem beidseitig von dem Bestandteil 3 bzw. von dem Bestandteil 4 beaufschlagten Kolben 28 bzw. 28' vorgesehen ist, welcher kein Tauchkolben ist. Aus einem Ende des Zylinders 27 bzw. 27' führt eine Kolbenstange heraus, welche sich in eine Spindel 29, 29' fortsetzt, welche jeweils durch einen Elektromotor 30, 30' antreibbar ist, bei dem es sich bevorzugt um einen Servomotor handelt.

Der Zylinder 27, 27' hat zu beiden Seiten des Kolbens 28, 28' je einen Zugang, in welchen eine Leitung 31, 32 bzw. 31', 32' mündet, die von einem 3/2-Wegeventil 13, 14 bzw. 13', 14' kommt.

In den gezeichneten Stellungen der Wegeventile 13, 14, 13', 14' wird die rechte Speicherkammer der Zylinder 27, 27' nachgefüllt und die linke Speicherkammer gibt Material ab, welches über den dynamischen Mischer 20 zur Düse 25 gelangt, durch welche die gemischte pastöse Masse in die Randfuge einer Isolierglasscheibe gespritzt werden kann, welche zwei Glastafeln 33 und 34 aufweist, zwischen denen ein rahmenförmiger Abstandhalter 35 angeordnet ist. Durch Umschalten der vier Wegeventile 13, 14, 13', 14' werden die Funktionen der Speicherkammern in den Zylinder 27, 27' vertauscht.

Das in Figur 2 dargestellte Ausführungsbeispiel ermöglicht einen besonders leichten und kompakten Aufbau der Versiegelungsvorrichtung.

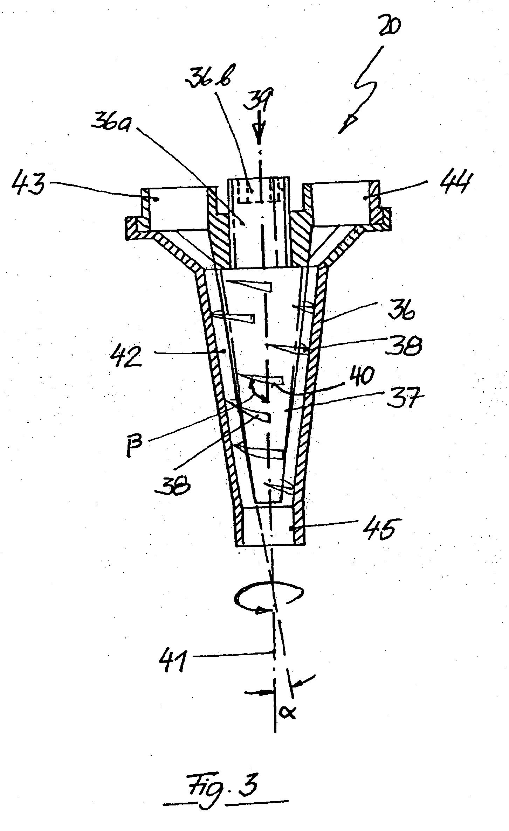

Figur 3 zeigt ein Beispiel eines dynamischen Mischers 20, welcher ein konisches Mischrohr 36 hat, in welchem eine konische Mischerwelle 37 gelagert ist, welche in einem aus dem Mischrohr 36 vorstehenden Wellenzapfen 36a ein Sackloch 36b mit Sechskäntquerschnitt hat, in welches formschlüssig eine treibende Welle eines Motors 46 (siehe Figuren 1 und 2) eingreifen kann.

Die Mischerwelle 37 hat den gleichen Konuswinkel α wie das Mischrohr 36, sodass zwischen beiden ein Ringspalt 42 von gleich bleibender Breite besteht.

Die Mischerwelle 37 trägt als Mischelemente, 38 radial abstehende Flügel, die bis unmittelbar an die innere Oberfläche des Mischrohrs 36 reichen. Die Mischelemente 38 haben eine in Förderrichtung 39 weisende Fläche 40, welche um einen von 90° verschiedenen Winkel β zur Längsachse 41 so angestellt sind, dass die sich mit der Mischerwelle 37 drehenden Mischelemente 38 einen Vortrieb der im Mischer 20 befindlichen Masse bewirken.

Zwei zu vermischende Bestandteile einer abbindenden Versiegelungsmasse Werden durch zwei Einlassstutzen 43 und 44 zugeführt. Die Mischung verlässt den Mischer 20 durch einen Auslass 45.

**Bezugszahlenliste:**

| | | | |
|---|---|---|---|
| 1. | Gebinde | 29, 29' | Spindel |
| 2. | Gebinde | 30, 30' | Elektromotor |
| 3. | Bestandteil | 31, 31' | Leitung |
| 4. | Bestandteil | 32, 32' | Leitung |
| 5, 5' | Folgeplatte | 33. | Glastafel |
| 6, 6' | Stange | 34. | Glastafel |
| 7, 7' | Traverse | 35. | Abstandhalter |
| 8, 8' | Kolbenstange | 36. | Mischrohr |
| 9, 9' | Zylinder | 36a. | Wellenzapfen |
| 10, 10' | Bodenplatte | 36b. | Sackloch |
| 11, 11' | Pumpe | 37. | Mischerwelle |
| 12, 12' | Leitung | 38. | Mischelemente |
| 12a, 12'a | Leitung | 39. | Förderrichtung |
| 12b, 12'b | Leitung | 40. | Fläche von 38 |
| 12c, 12'c | Leitung | 41. | Längsachse |
| 12d, 12'd | Leitung | 42. | Ringspalt |
| 13, 13' | Wegeventil | 43. | Einlassstutzen |
| 14, 14' | Wegeventil | 44. | Einlassstutzen |
| 15, 15' | Zylinder | 45. | Auslass |
| 16, 16' | Zylinder | 46. | Motor |
| 17, 17' | Tauchkolben (Plunger) | α. | Winkel |
| 18, 18' | Leitung | β | Winkel |
| 19. | Rückschlagventil | | |
| 20. | dynamischer Mischer | | |
| 21, 21' | Überdruckventil | | |
| 22. | Wegeventil | | |
| 23. | Leitung | | |
| 24. | Wegeventil | | |
| 25. | Düse | | |
| 26, 26' | Arm | | |
| 27, 27' | Zylinder | | |
| 28, 28' | Kolben | | |

## Patentansprüche

1. Verwendung einer Vorrichtung zum Erzeugen eines Stranges aus einer aus mehreren Bestandteilen gebildeten Masse
mit einer Düse (25),
mit je einem Speicher (15, 15', 16, 16', 27, 27') für jeden der Bestandteile der Masse, welcher mit der Düse (25) durch einen Förderweg verbunden ist,
mit einem dynamischen Mischer (20), welcher in dem Förderweg vorgesehen ist,
und mit Verdrängern (17, 17', 28, 28'), welche in die Speicher (15, 15', 16, 16', 27, 27') eingreifen und durch deren jeweilige Betätigung ein Bestandteil der Masse aus dem jeweiligen Speicher (15, 15', 16, 16', 27, 27') in den Förderweg hinein verdrängt wird,
zum Einspritzen des Stranges in den Zwischenraum zwischen zwei Glastafeln (33, 34) einer Isolierglasscheibe,
**dadurch gekennzeichnet, dass**
durch das Mischen eine pastöse Masse auf der Basis eines Thiokols oder eines Polyurethans entsteht, welche bereits, wenn sie durch den dynamischen Mischer (20) hindurchgefördert wird, pastös ist und dann fortschreitend abbindet, wobei sie sich verfestigt,
dass beim Einspritzen ein einheitlicher Strang aus der pastösen Masse gebildet wird, welcher sich von der einen Glastafel (33) bis zu der 15 mm bis 25 mm beabstandeten gegenüberliegenden Glastafel (34) erstreckt,
und dass die Düse (25) und die mit ihr in Verbindung stehenden Anordnungen, welche aus dem Speicher (15, 15', 16, 16', 27, 27') und dem Verdränger (17, 17', 28, 28') bestehen, sowie der mit der Düse (25) in Verbindung stehende dynamische Mischer (20) auf einem beweglichen gemeinsamen Träger angebracht sind und zusammen mit der Düse (25) am Rand der Isolierglasscheibe entlang bewegt werden.

2. Verwendung der Vorrichtung nach Anspruch 1, **dadurch gekennzeichnet, dass** der dynamische Mischer (20) ein zylindrisches oder kegelstumpfförmiges Mischrohr (36) hat, in welchem eine antreibbare Mischerwelle (37) angeordnet ist, welche mit von der Mischerwelle (37) abstehenden Mischelementen (38) versehen ist.

3. Verwendung der Vorrichtung nach Anspruch 2, **dadurch gekennzeichnet, dass** die Mischelemente (38) radial von der Mischerwelle (37) abstehen.

4. Verwendung der Vorrichtung nach Anspruch 2 oder 3, **dadurch gekennzeichnet, dass** die Mischelemente (38) wendelförmig um die Mischerwelle (37) herum angeordnet sind.

5. Verwendung der Vorrichtung einem der Ansprüche 2 bis 4, **dadurch gekennzeichnet, dass** die Mischelemente (38) Flügel sind.

6. Verwendung der Vorrichtung nach einem der Ansprüche 1 bis 4, **dadurch gekennzeichnet, dass** der Mischer (20) als Mischelemente (38) Bügel hat.

7. Verwendung der Vorrichtung nach einem der Ansprüche 2 bis 4, **dadurch gekennzeichnet, dass** die Mischelemente (38) schaufelartig ausgebildet sind.

8. Verwendung der Vorrichtung nach einem der Ansprüche 2 bis 7, **dadurch gekennzeichnet, dass** die Mischelemente (38) in Förderrichtung (39) weisende Flächen (40) haben, welche unter einem von 90° verschiedenen Winkel (β) zur Längsachse (41) der Mischerwelle (37) so angeordnet sind, dass sie bei angetriebener Mischerwelle (37) einen Vortrieb der pastösen Masse bewirken.

9. Verwendung der Vorrichtung nach einem der Ansprüche 2 bis 8, **dadurch gekennzeichnet, dass** sich die Mischelemente (38) bis an die innen liegende Umfangswand des Mischrohrs (36) erstrecken.

10. Verwendung der Vorrichtung nach Anspruch 1, **dadurch gekennzeichnet, dass** der Mischer (20) ein Mischrohr aufweist, in welchem eine Schnecke antreibbar angeordnet ist.

11. Verwendung der Vorrichtung nach Anspruch 10, **dadurch gekennzeichnet, dass** sich der radial außen liegende Rand der Schnecke bis an die innen liegende Umfangswand des Mischrohrs erstreckt.

12. Verwendung der Vorrichtung nach einem der vorstehenden Ansprüche, **dadurch gekennzeichnet, dass** der Strömungsquerschnitt des Mischers (20) und seine Antriebsleistung für einen Durchsatz der pastösen Masse von mindestens 3 l/min ausgelegt sind.

## Claims

1. Use of a device for producing a strand of a mass formed from a plurality of constituents,
comprising a nozzle (25),
comprising a storage unit (15, 15', 16, 16', 27, 27') for each of the constituents of the mass, which storage unit is connected to the nozzle (25) by means of a supply path,
comprising a dynamic mixer (20), which is provided in the supply path,
and comprising displacement members (17, 17', 28, 28'), which engage with the storage units (15, 15', 16, 16', 27, 27'), the actuation of said displacement members, respectively, causing a constituent of the mass to be displaced from its particular storage unit (15, 15', 16, 16', 27, 27') into the supply path,
for injecting the strand into the intermediate space between two glass plates (33, 34) of an insulating glass pane,
**characterised in that**
by mixing, a paste-like mass based on a Thiokol or a polyurethane is produced, which is already paste-like when it is passed through the dynamic mixer (20) and then sets progressively, wherein it solidifies,
**in that**, during the injection, a uniform strand of the paste-like mass is formed, which extends from one glass plate (33) to the opposite glass plate (34), which is distanced from the first glass plate by 15 mm to 25 mm,
and **in that** the nozzle (25) and the arrangements connected thereto, which consist of the storage unit (15, 15', 16, 16', 27, 27') and the displacement member (17, 17', 28, 28'), and also the dynamic mixer (20) connected to the nozzle (25) are mounted on a movable common support and are moved along the edge of the insulating glass pane together with the nozzle (25).

2. The use of the device according to claim 1, **characterised in that** the dynamic mixer (20) has a cylindrical or truncated cone-shaped mixing tube (36), in which a drivable mixer shaft (37) is arranged, which is provided with mixing elements (38), which protrude from the mixer shaft (37).

3. The use of the device according to claim 2, **characterised in that** the mixing elements (38) protrude radially from the mixer shaft (37).

4. The use of the device according to claim 2 or 3, **characterised in that** the mixing elements (38) are arranged around the mixer shaft (37) in a helical manner.

5. The use of the device according to any one of claims 2 to 4, **characterised in that** the mixing elements (38) are blades.

6. The use of the device according to any one of claims 1 to 4, **characterised in that** the mixer (20) has bails as mixing elements (38).

7. The use of the device according to any one of claims 2 to 4, **characterised in that** the mixing elements (38) are embodied in a shovel-like manner.

8. The use of the device according to any one of claims 2 to 7, **characterised in that** the mixing elements (38) have surfaces (40), which point in the supply direction (39) and which are arranged at an angle (β) to the longitudinal axis (41) of the mixer shaft (37), which angle differs from 90°, so that they effect an advance of the paste-like mass in response to a driven mixer shaft (37).

9. The use of the device according to any one of claims 2 to 8, **characterised in that** the mixing elements (38) extend up to the interior peripheral wall of the mixing tube (36).

10. The use of the device according to claim 1, **characterised in that** the mixer (20) has a mixing tube, in which a worm is arranged so as to be capable of being driven.

11. The use of the device according to claim 10, **characterised in that** the edge of the worm located radially outside extends up to the interior peripheral wall of the mixing tube.

12. The use of the device according to any one of the preceding claims, **characterised in that** the flow cross section of the mixer (20) and its drive power are designed for a throughput of the paste-like mass of at least 3 l/min.

## Revendications

1. Utilisation d'un dispositif pour réaliser un boudin à partir d'une masse constituée de plusieurs composants
avec une buse (25),
avec, pour chacun des composants de la masse, un réservoir de stockage (15, 15', 16, 16', 27, 27'), lequel est relié avec la buse (25) par un parcours de transport,
avec un mélangeur dynamique (20), lequel est prévu sur le parcours de transport,
et avec des refouleurs (17, 17', 28, 28'), lesquels rentrent dans les réservoirs de stockage (15, 15', 16, 16', 27, 27') et un composant de la masse est refoulé dans le parcours de transport à partir du réservoir de stockage correspondant (15, 15', 16, 16', 27, 27') par son actionnement,
pour l'injection d'un boudin dans l'espace intermédiaire entre deux plaques de verre (33, 34) d'un vitrage isolant,
**caractérisée en ce que**
par le mélange, une masse pâteuse à base d'un thiokol ou d'un polyuréthane est réalisée, laquelle est déjà pâteuse lorsqu'elle est transportée à travers le mélangeur dynamique (20) et ensuite se lie progressivement, ce par quoi elle se solidifie,
de sorte qu'un boudin uniforme est formé à partir de la masse pâteuse, laquelle s'étend à partir d'une plaque de verre (33) jusqu'à l'autre plaque de verre (34) située en face d'elle à une distance de 15 mm à 25 mm,
et que la buse (25) et les ensembles étant en relation avec elle, lesquels sont constitués du réservoir de stockage (15, 15', 16, 16', 27, 27') et du refouleur (17, 17', 28, 28'), ainsi que le mélangeur dynamique (20) étant en relation avec la buse (25) sont rapportés sur un support commun mobile et sont déplacés ensemble avec la buse (25) sur le bord le long de la vitre isolante.

2. Utilisation du dispositif selon la revendication 1, **caractérisée en ce que** le mélangeur dynamique (20) a un tube de mélange (36) cylindrique ou en forme de cône, dans lequel est disposé un arbre de mélangeur (37) pouvant être entraîné, lequel est muni d'éléments mélangeurs (38) dépassant de l'arbre de mélangeur (37).

3. Utilisation du dispositif selon la revendication 2, **caractérisée en ce que** les éléments de mélange (38) dépassent radialement de l'arbre de mélangeur (37).

4. Utilisation du dispositif selon les revendications 2 ou 3, **caractérisée en ce que** les éléments de mélange (38) sont disposés en forme d'hélices autour de l'arbre de mélangeur (37).

5. Utilisation du dispositif selon l'une des revendications 2 à 4, **caractérisée en ce que** les éléments de mélange (38) sont des pales.

6. Utilisation du dispositif selon l'une des revendications 1 à 4, **caractérisée en ce que** le mélangeur (20) a des étriers en tant qu'éléments de mélange (38).

7. Utilisation du dispositif selon l'une des revendications 2 à 4, **caractérisée en ce que** les éléments de mélange (38) sont conçus comme des pelles.

8. Utilisation du dispositif selon l'une des revendications 2 à 7, **caractérisée en ce que** les éléments de mélange (38) ont des surfaces orientées dans la direction de transport (39), lesquelles sont disposées sous un angle (β) différent de 90 ° par rapport à l'axe longitudinal (41) de l'arbre de mélangeur (37) de telle manière qu'elles provoquent une avancée de la masse pâteuse lorsque l'arbre de mélangeur (37) est entraîné.

9. Utilisation du dispositif selon l'une des revendications 2 à 8, **caractérisée en ce que** les éléments de mélange (38) s'étendent jusqu'à la paroi circonférentielle se situant à l'intérieur du tube de mélange (36).

10. Utilisation du dispositif selon la revendication 1, **caractérisée en ce que** le mélangeur (20) présente un tube de mélange dans lequel est disposée une vis sans fin pouvant être entraînée.

11. Utilisation du dispositif selon la revendication 10, **caractérisée en ce que** le bord de la vis sans fin se situant radialement à l'extérieur s'étend jusqu'à la paroi circonférentielle se situant à l'intérieur du tube de mélange.

12. Utilisation du dispositif selon l'une des revendications précédentes, **caractérisée en ce que** la section transversale d'écoulement du mélangeur (20) et sa puissance d'entraînement sont conçues pour un débit de la masse pâteuse d'au moins 3 l/min.
